# EUROPÄISCHE PATENTSCHRIFT

(11) **EP 1 890 871 B1**
(45) Veröffentlichungstag und Bekanntmachung des Hinweises auf die Patenterteilung: **02.06.2021**
(21) Anmeldenummer: 06753260.6
(22) Anmeldetag: 08.06.2006
(51) Int. Cl.: B32B 15/08, B65D 65/40

(54) **MEHRLAGIGE FOLIE MIT 3-FACH COEXTRUSIONSFOLIE**
MULTI-LAYER FILM WITH TRIPLE COEXTRUSION FILM
FILM MULTICOUCHE DOTE D'UN FILM DE COEXTRUSION TRIPLE

(30) Priorität: 08.06.2005 DE 102005026550; 29.06.2005 DE 102005030163
(43) Veröffentlichungstag der Anmeldung: 27.02.2008
(73) Patentinhaber: Greif Flexibles Trading Holding B.V., 2316 XC Leiden (NL)
(72) Erfinder: TAVSANLI, Bülent 9 Paliye Sitesi, Istanbul (TR); DOGAN, Afsin, Istanbul (TR); GREWE, Andreas, 48432 Rheine (DE); BOSTAN, Atilla Teoman, Istanbul (TR)
(74) Vertreter: Meissner Bolte Partnerschaft mbB
(86) Internationale Anmeldenummer: PCT/DE2006/000989
(87) Internationale Veröffentlichungsnummer: WO 2006/131104

(56) Entgegenhaltungen:
- EP-A2- 0 983 842
- WO-A-00/67994
- DE-A1- 3 720 743
- DE-U1- 9 207 044
- US-A- 5 023 120

## Beschreibung

Die Erfindung betrifft eine mehrlagige Folie nach dem Oberbegriff des Anspruchs 1.

Aus der US-A-5,023,120 ist eine derartige Folie als Verpackungsmaterial bekannt. Eine Aluminiumlage ist zum Schutz lichtempfindlicher Produkte wie z. B. photografischer Materialien vor einfallendem Licht vorgesehen. Die so herstellbare Verpackung kann leicht von Hand aufgerissen werden und ermöglicht somit eine sichere und schnelle Entnahme eines in der Folie verpackten Produktes auch im Dunkeln.

Aus der Praxis sind derartige Folien bekannt, die beispielsweise zur Auskleidung von so genannten "Big Bags" dienen.

Die ableitfähige Barrierelage soll erstens einen zuverlässigen Produktschutz z. B. gegen Geruchsstoffe, Luft und / oder Feuchtigkeit bewirken und zweitens die Erdung eines aus der mehrlagigen Folie hergestellten Packmittels ermöglichen. Das Packmittel kann als flexibler Behälter ausgestaltet sein, welcher als eigener Behälter dienen kann oder als Inliner eines "Big Bag". Die ableitfähige Barrierelage ist als Aluminiumlage gefertigt, da Aluminium die gewünschten Barriereeigenschaften sicherstellt und wirtschaftlich zu verarbeiten ist.

Die Kunststofflage reduzierten elektrischen Widerstandes dient einerseits dazu, einen Kontakt des im Behälter vorgesehenen Produktes mit dem Aluminium zu vermeiden, und andererseits dazu, elektrostatische Aufladungen und damit verbundene Gefahren, zum Beispiel Explosionsgefahren, zu vermeiden. Als "reduzierter elektrischer Widerstand" ist dabei bezeichnet, dass die Kunststofflage einen im Vergleich zum reinen Kunststoff geringeren elektrischen Widerstand aufweist, also nicht isolierende, sondern antistatische oder ableitfähige elektrische Eigenschaften aufweist. Der reduzierte elektrische Widerstand dieser Kunststofflage wird dementsprechend üblicherweise nicht durch einen speziell ausgewählten reinen Kunststoff, sondern durch bestimmte Beimischungen zu einem Kunststoffmaterial erzielt, wobei derartige Beimischungen handelsüblich sind.

Bei den Kunststofflagen reduzierten elektrischen Widerstandes wird unterschieden zwischen den
▪ ableitfähigen Kunststofflagen, die über ihre Schichtdicke einen elektrischen Widerstand von höchstens 10⁸Ω aufweisen,
▪ antistatischen Kunststofflagen, die über ihre Schichtdicke einen elektrischen Widerstand von zwischen 10⁸Ω und 10¹¹Ω aufweisen, wobei beide vorgenannten Kunststofflagen im Gegensatz zu
▪ isolierenden Kunststofflagen stehen, die über ihre Schichtdicke einen elektrischen Widerstand von mehr als 10¹¹Ω aufweisen und dementsprechend einen für den verwendeten Kunststoff typischen oder sogar durch Beimischungen bewusst erhöhten, jedenfalls nicht reduzierten elektrischen Widerstand.

Nachfolgend wird die Kunststofflage reduzierten elektrischen Widerstandes häufig auch zugunsten einer sprachlichen Vereinfachung verkürzt als "ableitfähige Kunststofflage" bezeichnet, selbst wenn es sich dabei z. B. entsprechend der obigen Definition um eine lediglich "antistatische", nicht jedoch "ableitfähige" Kunststofflage handelt.

Die Verbindung zwischen der Kunststofflage reduzierten elektrischen Widerstandes und der Aluminiumlage ist problematisch, wenn, wie dies in der Praxis bekannt und üblich ist, die ableitfähige Kunststofflage durch Einlagerung von Kohlenstoff-Bestandteilen ableitfähig - oder eben antistatisch - ausgestaltet ist. Die Kohlenstoffzusätze bergen nämlich die Gefahr einer schlechten Verbindung zur benachbarten Lage, so dass ggf. die Aluminiumlage von der ableitfähigen Kunststofflage unter den im Betrieb auftretenden Belastungen gelöst werden kann, so dass der Verbund der insgesamt mehrlagigen Folie auf diese Weise insbesondere im Schweißnahtbereich unterbrochen bzw. zerstört werden kann.

Aus der DE 44 31 046 A1 ist ein Kunststoffverpackungsbehälter mit verbesserter elektrostatische Ableitfähigkeit bekannt, bei dem die zum Produkt gewandte Seite der die Behälterwandung bildenden Verbundfolie eine Perforation aufweist, um einen Ladungstransport elektrischer Ladung zu einer elektrisch leitfähigen Zwischenschicht in der Verbundfolie zu ermöglichen. Ein solcher Behälter ist nicht für den Kontakt mit Lebensmitteln oder Pharmazeutika zugelassen, da deren Kontakt mit der elektrisch leitfähigen, metallischen Zwischenschicht nicht zulässig ist.

Aus der DE 92 07 044 U1 ist eine durchsichtige antistatische Verbundfolie bekannt, die beispielsweise als feste und hermetisch abgeschlossene Umhüllung elektronischer Bauteile vorgesehen ist. Eine lebensmittelrechtliche Eignung dieses Verpackungsmaterials ist nicht vorgesehen. Auch aus der EP 0 219 315 A2, aus der DE 88 14 712 U1 und der EP 0 003 402 A1 sind antistatische Verbundfolien bekannt.

Aus der EP 0 512 364 A1 ist eine dreilagige Verbundfolie bekannt, bei welcher die drei Lagen coextrudiert werden. Eine erste äußere Schicht ist mechanisch belastbar. Eine mittlere Schicht ist als Barrierelage vorgesehen, die sauerstoffdicht und lichtdicht ist. Eine zweite äußere Schicht ist dazu vorgesehen, die Barrierelage zu schützen, indem ein Kontakt mit dem verpackten Produkt vermieden wird, und zudem eine Verschweißung mit sich selbst zu ermöglichen, wenn die Verpackung gesiegelt wird. Die Verbindung mit weiteren Schichten ist bei dieser Verbundfolie nicht vorgesehen.

Der Erfindung liegt die Aufgabe zugrunde, eine gattungsgemäße Folie dahingehend zu verbessern, dass einerseits ein zuverlässiger Verbund sämtlicher Lagen unter den im Betrieb auftretenden Belastungen sichergestellt ist und weiterhin die insgesamt mehrlagige Folie lebensmittelrechtlich und elektrostatisch unbedenklich ausgestaltet werden kann, also eine Durchschlagspannung bis zur Aluminiumlage von nicht mehr als 4 kV aufweist. Weiterhin liegt der Erfindung die Aufgabe zugrunde, ein Verfahren zur Herstellung einer derartigen Folie anzugeben. Schließlich liegt der Erfindung die Aufgabe zugrunde, einen als Bigbag oder FIBC bezeichneten Behälter zu schaffen, der elektrostatisch und lebensmittelrechtlich unbedenklich ausgestaltet ist.

Diese Aufgabe wird durch eine Folie mit den Merkmalen des Anspruchs 1 gelöst, sowie durch ein Verfahren nach Anspruch 19 und einen Behälter nach Anspruch 20.

Die Erfindung schlägt mit anderen Worten vor, die antistatische bzw. ableitfähige Kunststofflage nicht unmittelbar mit der Barriere- bzw. Aluminiumlage zu verbinden, beispielsweise unter Verwendung eines Haftvermittlers, sondern dazwischen eine zusätzliche Schicht vorzusehen. Diese zusätzliche Schicht kann in an sich bekannter Weise, beispielsweise unter Verwendung eines Haftvermittlers oder im Extrusionsverfahren, mit der Aluminiumlage verbunden werden. Im Extrusionsverfahren wird dabei kurz vor dem Kontakt der als Flachfolie gefertigten Aluminiumlage mit der zunächst als Schlauch gefertigten und anschließend aufgeschnittenen und flach ausgebreiteten Folie, welche die zusätzliche Schicht aufweist, ein flüssiges Polymer wie z. B. PE aufgespritzt, welches - wie im anderen Fall der Haftvermittler - eine gute Verbindung der Aluminiumlage mit der zusätzlichen Schicht ermöglicht.

Die zusätzliche Schicht ist vorschlagsgemäß ihrerseits zuverlässig mit der ableitfähigen Kunststofflage dadurch verbunden, dass sowohl diese genannte zusätzliche Schicht als auch eine auf der anderen Seite der ableitfähigen Kunststofflage vorgesehene Schicht zusammen mit der ableitfähigen Kunststofflage selbst als dreischichtige Coextrusionsfolie erstellt wird. Durch die Coextrusion dieser drei Schichten erfolgt eine Verschweißung bzw. Verschmelzung der einzelnen Schichten noch im flüssigen Zustand, so dass hierdurch eine zuverlässige Verankerung der erstgenannten zusätzlichen Schicht, die zur Aluminiumlage hin ausgerichtet ist, mit der ansonsten schlecht kaschierbaren bzw. verklebbaren ableitfähigen Kunststofflage ermöglicht wird.

Mit anderen Worten:
▪ Dadurch, dass die ableitfähige Kunststofflage einen hohen Anteil von die Ableitfähigkeit verbessernden Zusätzen aufweist, wie beispielsweise Kohlenstoff, ist sie normalerweise schlecht mit anderen Schichten einer mehrlagigen Folie verbindbar, z. B. mit der ableitfähigen Barrierelage, die aus Aluminium besteht.
▪ Zwar kann der Anteil dieser erwähnten Zusätze reduziert werden, um die ableitfähige Kunststofflage besser mit der ableitfähigen Barrierelage verbinden zu können, jedoch ergibt sich dann nachteilig eine höhere Durchschlagspannung der Folie.
▪ Zwar kann - als eine erste Alternative - zur Absenkung der Durchschlagspannung die Schichtdicke der gesamten Folie reduziert werden, indem die ableitfähige Kunststofflage eine äußere Schicht der Folie bildet und nicht von einem zu verpackenden Produkt durch eine zusätzliche Trennschicht getrennt ist, jedoch ist dann diese Folie nicht für den Kontakt mit Lebensmitteln oder Pharmazeutika zugelassen, da deren Kontakt mit den die Ableitfähigkeit verbessernden Zusätzen zu vermeiden ist.
▪ Zwar kann - als eine zweite Alternative - zur Absenkung der Durchschlagspannung vorgesehen werden, die ableitfähige Kunststofflage zu perforieren, so dass ein Transport elektrischer Ladungen zur ableitfähigen Barrierelage erleichtert ist, jedoch ist auch in diesem Fall eine derartige Folie nicht für den Kontakt mit Lebensmitteln oder Pharmazeutika zugelassen, da deren Kontakt mit der ableitfähigen Barrierelage, die
   aus Aluminium besteht , zu vermeiden ist.

Vorschlagsgemäß wird dieses Problem von Zielkonflikten bei der Entwicklung einer Verpackungsfolie dadurch gelöst, dass die an sich schlecht verbindbare ableitfähige Kunststofflage durch einen Coextrusionsvorgang mit zwei äußeren Schichten versehen wird, von denen die eine eine gute Verbindbarkeit mit anderen Schichten ermöglicht, und die andere eine lebensmittelrechtlich unbedenkliche Trennschicht zum Produkt hin bildet. Während der Coextrusion lassen sich nämlich überraschend auch ableitfähige Kunststofflagen, die einen hohen Anteil von die Ableitfähigkeit verbessernden Zusätzen aufweisen, mit anderen Schichten zuverlässig verbinden.

Dadurch, dass die Verbindung der drei Schichten zu einer Gesamtfolie durch Coextrusion erfolgt und auf Haftvermittler zwischen den drei Schichten verzichtet werden kann, wird die Durchschlagspannung dieser dreilagigen Coextrusionsfolie besonders niedrig gehalten, so dass trotz der Verwendung vergleichsweise vieler Schichten insgesamt eine mehrlagige Folie geschaffen werden kann, die problemlos die Anforderungen erfüllt, die an eine elektrostatische ableitfähige mehrlagige Folie gestellt werden.

Wenn in der vorerwähnten DE 44 31 046 A1 erwähnt wird, dass für die dort vorgesehene Innenschicht auch eine coextrudierte Folie verwendet werden kann, so reflektiert das lediglich eine in der Praxis vielfach übliche, produktionstechnisch möglichst wirtschaftliche Nutzung bestehender Einrichtungen: wenn nämlich eine vorhandene Produktionsanlage einen Coextruder aufweist, werden auch Folien als Coextrusionsfolien hergestellt, deren mehrere Schichten aus identischem Material bestehen. Diese Art der Folienherstellung ist wirtschaftlicher, als für solche Fälle zusätzlich einen Monoextruder bereitzustellen. Jedenfalls gibt die DE 44 31 046 A1 keinen Hinweis darauf, die coextrudierte Folie aus mehreren Schichten unterschiedlicher Materialien herzustellen, und insbesondere nicht darauf, die coextrudierte Folie durch Wahl der Materialien der einzelnen Schichten innerhalb der coextrudierten Folie zugunsten eines reduzierten elektrischen Widerstandes auszugestalten. Hierzu sind vielmehr die Perforationen in der Innenschicht, also in der gesamten coextrudierten Folie vorgeschlagen, die einen Ladungstransport elektrischer Ladung zu der elektrisch leitfähigen Zwischenschicht in der Verbundfolie ermöglichen sollen. Aufgrund dieser Perforationen muss die Innenschicht gemäß der DE 44 31 046 A1 kein Material enthalten, welches einen reduzierten elektrischen Widerstandes aufweist und welches möglicherweise schlecht mit benachbarten Schichten verbindbar ist, so dass sich auch kein Problem ergibt, wie die Innenschicht mit anderen Schichten der Verbundfolie verbunden werden kann.

Weiterhin ist erfindungsgemäß vorgesehen, die Unversehrtheit der vergleichsweise dünnen Aluminiumlage dadurch sicherzustellen, dass sie auf der Seite, welche der Coextrusionsfolie abgewandt ist, mit einer dehnungsarmen Kunststofflage versehen ist, welche die Aufnahme von Zugkräften ermöglicht, ohne dass dabei Risse in der Aluminiumlage auftreten.

Vorteilhaft kann eine PET-Folie die dehnungsarme Kunststofflage bilden, da PET einerseits in an sich bekannter Weise problemlos mit der Aluminiumlage verbindbar ist und andererseits die Aufnahme hoher Zugkräfte bei lediglich geringer Dehnung ermöglicht.

Die dehnungsarme Kunststofflage kann alternativ aus orientiertem Polypropylen (OPP) bestehen, wobei allerdings sowohl PET als auch OPP lediglich beispielhaft genannte Materialien sind, die sich in praktischen Versuchen bewährt haben.

Vorteilhaft kann die Aluminiumlage mittels eines Haftvermittlers mit der Coextrusionsfolie verbunden sein. Diese an sich bekannte Verbindungstechnik stellt eine betriebssichere Verbindung der Aluminiumlage mit der Coextrusionsfolie dar und wird dadurch ermöglicht, dass die eingangs erwähnte zusätzliche Schicht in der Coextrusionsfolie zwischen der ableitfähigen Kunststofflage und der Aluminiumlage vorgesehen ist, so dass eine zuverlässige Anbindung an die Aluminiumlage ermöglicht ist, die bei Verwendung eines Haftvermittlers zwischen der Aluminiumlage und direkt der ableitfähigen Kunststofflage nicht zu einer ausreichenden mechanischen Stabilität der Verbundfolie führen würde.

Vorteilhaft kann die eingangs erwähnte zusätzliche Schicht antistatisch ausgestaltet sein. Auf diese Weise wird eine unzulässig hohe Durchschlagspannung der mehrlagigen Folie vermieden, selbst wenn der Haftvermittler der Aluminiumlage und der vorerwähnten zusätzlichen Schicht vorgesehen wird, keine guten ableitfähigen Werte aufweist. Zudem kann die vorerwähnte zusätzliche Schicht möglichst dünn ausgestaltet sein, beispielsweise eine Schichtdicke von 10 µm nicht überschreiten, so dass auch hierdurch eine möglichst geringe Durchschlagspannung bis zur Aluminiumfolie ermöglicht wird.

Die antistatische Ausgestaltung der vorerwähnten zusätzlichen Schicht kann insbesondere dadurch erfolgen, dass dem diese Schicht bildenden Kunststoff ein permanent antistatisches Additiv zugesetzt ist, wobei vorteilhaft diese Schicht aus Polyethylen gebildet ist, welches eine problemlose Anbindung an die Aluminiumlage mittels Haftvermittler ermöglicht.

Die auf der gegenüberliegenden Seite der ableitfähigen Kunststofflage, also auf der von der Aluminiumlage abgewandten Seite vorgesehene Schicht der insgesamt dreischichtigen Coextrusionsfolie kann vorteilhaft aus Polyethylen gebildet sein. Hier ist insbesondere die Verwendung von möglichst reinem Polyethylen vorteilhaft, welches erstens lebensmittelrechtlich unbedenklich ist und so dass zweitens auf kostenträchtige Additive verzichtet werden kann und weiterhin durch die Materialeigenschaften des reinen Polyethylens eine hervorragende Verschweißbarkeit der Folie gegeben ist, wenn beispielsweise zwei Abschnitte derselben Folie oder zwei gleichartige Folien mit ihrer jeweiligen PE-Oberfläche zueinander gerichtet und verschweißt werden, so dass sich eine hervorragende Schweißnahtfestigkeit ergibt.

Die vorerwähnte mehrlagige Folie kann insbesondere zum Aufbau der Wandung eines Verpackungsbehälters dienen, beispielsweise der eingangs erwähnten Big Bags, wobei vorteilhaft die mehrlagige Folie zur Herstellung eines Inliners eines derartigen Verpackungsbehälters dienen kann. Die äußere Hülle derartiger Verpackungsbehälter können in an sich bekannter Weise aus einem reißfesten Gewebe bestehen.

Am Beispiel eines flexiblen Verpackungsbehälters wird nachfolgend der vorgeschlagene Folienaufbau näher erläutert, wobei Bezeichnungen wie "innen" und "außen" davon ausgehend verwendet werden, dass sie zum Behälterinneren bzw. zur Außenseite des Behälters gerichtete Schichten oder Lagen der Verbundfolie betreffen.

So kann beispielsweise eine nach außen gerichtete dehnungsarme Lage der Verbundfolie eine Schichtstärke von etwa 12 µm aufweisen und aus Polyester (PET) oder aus orientiertem Polypropylen (OPP) bestehen.

Als nach innen nächstfolgende Lage der mehrlagigen Folie ist die bereits erwähnte Aluminiumlage vorgesehen.

Die Schichtdicke der Barrierelage, kann bei Verwendung einer Aluminiumlage beispielsweise etwa 9 - 12 µm betragen.

Als nächsten Bestandteil weist die mehrlagige Folie eine Coextrusionsfolie auf, die mittels eines Haftvermittlers mit der Aluminiumlage verbunden ist. Der Aluminiumlage nächst benachbart ist dabei innerhalb der dreilagigen Coextrusionsfolie eine sehr dünne Kunststoffschicht vorgesehen, die eine Schichtdicke von beispielsweise etwa 8 µm aufweist und die aus einem mit der Aluminiumlage problemlos verbindbaren Kunststoff, beispielsweise einem Polyethylen, insbesondere beispielsweise einem LDPE besteht, wobei dieser Schicht ein permanent antistatisches Additiv beigemischt ist, welches in der Praxis handelsüblich ist.

Die mittlere Schicht der coextrudierten Folie besteht aus einer beispielsweise etwa 60 µm dicken Polyethylenfolie, beispielsweise einem LDPE, wobei dieses durch einen hohen Kohlenstoffanteil von beispielsweise 60% oder 65 % Karbon antistatisch bzw. ableitfähig eingestellt ist.

Die letzte und im Behälter am weitesten innen angeordnete Schicht der dreischichtigen Coextrusionsfolie und damit der gesamten fünflagigen Verbundfolie besteht aus einem lebensmittelrechtlich unbedenklichen Polyethylen, beispielsweise insbesondere einem LDPE und weist eine Schichtstärke von etwa 13 µm auf. Diese Schichtstärke ermöglicht eine zuverlässige Verschweißung der mehrlagigen Folie und eine Durchschlagspannung, die unterhalb von 4 kV liegt. Diese innerste Schicht ist auf ihrer zum Produkt gerichteten Innenseite vorzugsweise frei von Perforationen, Vertiefungen oder dergleichen, so dass in hygienisch vorteilhafter Weise ausgeschlossen ist, dass entweder ein ein sehr feines, z. B. staubartiges Produkt in Kontakt mit Behältermaterial kommen kann, von dem es eigentlich durch die innerste Schicht getrennt sein sollte, oder Reste dieses Produktes sich in den Perforationen oder Vertiefungen festsetzen können.

Die beiden äußeren Schichten der insgesamt dreischichtigen Coextrusionsfolie können auch vertauscht werden, wobei dann allerdings die am weitesten nach innen, also zum Produkt gerichtete Schicht das antistatische Additiv enthält und in vergleichsweise größerer Schichtstärke vorgesehen sein muss, um eine ausreichende Schweißnahtfestigkeit zu gewährleisten. Demgegenüber ist der vorgeschlagene Schichtaufbau bzw. die vorgeschlagene Schichtanordnung der dreischichtigen Coextrusionsfolie wirtschaftlich vorteilhafter.

Die äußerste dehnungsarme Schicht, beispielsweise die vorerwähnte PET-Schicht ist vorteilhaft an zwei gegenüberliegenden Rändern der Folie insofern schmaler bemessen als die Gesamtabmessung der Folie als dort die Aluminiumlage und die übrigen Lagen der Verbundfolie über die Breite der dehnungsarmen Kunststofflage hinausragen. Auf diese Weise liegt die Aluminiumlage im Bereich der äußeren Ränder der Verbundfolie frei, beispielsweise in einer Breite von etwa 10 mm, so dass sie problemlos geerdet werden kann bzw. mit einem äußeren Gewebe eines Big Bags elektrisch leitend verbunden werden kann, so dass insgesamt der Verpackungsbehälter problemlos geerdet werden kann.

Ein Ausführungsbeispiel der Erfindung wird nachfolgend anhand der rein schematischen Darstellung näher erläutert:

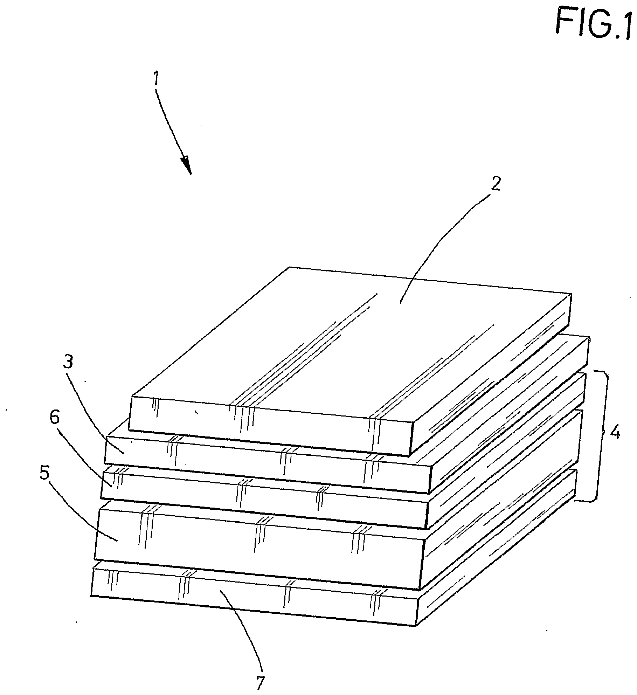

- Fig. 1: zeigt insgesamt einen schematischen Querschnitt durch die einzelnen Lagen bzw. Schichten einer insgesamt fünflagigen Folie, wobei der Übersichtlichkeit halber die einzelnen Lagen bzw. Schichten getrennt voneinander dargestellt sind und Zusatzwerkstoffe wie beispielsweise Haftvermittler nicht dargestellt sind.

Die gesamte mehrlagige Folie ist insgesamt mit 1 bezeichnet. Sie weist eine dehnungsarme Kunststofflage 2 aus PET mit einer Schichtstärke von 12 µm auf, die schmaler bemessen ist als sämtliche darunter dargestellte Lagen bzw. Schichten der Folie 1.

Die dehnungsarme Kunststofflage 2 ist mit einer darunter dargestellten Aluminiumlage 3 von 9 µm Schichtstärke verbunden, beispielsweise mittels Haftvermittler oder im Extrusionsverfahren, und diese Aluminiumlage 3 ist mit einer dreischichtigen Coextrusionsfolie 4 verbunden, beispielsweise ebenfalls mittels Haftvermittler oder im Extrusionsverfahren.

Die Coextrusionsfolie 4 besteht aus einer mittleren antistatischen oder ableitfähigen Polyethylenfolie 5 von 59 µm Schichtdicke sowie einer der Aluminiumlage 3 zugewandten Schicht 6 aus LDPE, welches mit einem permanent antistatischen Additiv angereichert ist.

Die innerste, zum Produkt gerichtete Schicht 7 weist eine Schichtdicke von 13 µm auf und besteht aus einem lebensmittelrechtlich unbedenklichen Polyethylen, nämlich LDPE. Diese Schicht hat Kontakt mit dem Füllgut des später aus der mehrlagigen Folie 1 gefertigten Packmittels.

## Patentansprüche

1. Als Bigbag oder FIBC bezeichneter Behälter mit antistatischen Eigenschaften, wobei die Wandung des Behälters eine mehrlagige Folie (1) aufweist, mit einer ableitfähigen Barrierelage, die durch eine Folie aus Metall, nämlich eine Aluminiumlage (3), gebildet ist,
und mit einer Kunststofflage (5) reduzierten elektrischen Widerstandes, welche die mittlere Schicht einer aus drei coextrudierten Schichten bestehenden Coextrusionsfolie (4) bildet,
und mit einer dehnungsarmen Kunststofflage (2), welche auf der von der Coextrusionsfolie (4) abgewandten Seite der Barrierelage vorgesehen ist, **dadurch gekennzeichnet, dass** die Barrierelage mit der Coextrusionsfolie (4) verbunden ist, die Kunststofflage (5) reduzierten elektrischen Widerstandes eingelagerte Kohlenstoff-Bestandteile mit einem Kohlenstoffanteil von 30% bis 80% aufweist,
derart,
• dass sie ableitfähig ausgestaltet ist, indem sie über ihre Schichtdicke einen elektrischen Widerstand von höchstens 10⁸Ω aufweist,
• oder dass sie antistatisch ausgestaltet ist, indem sie über ihre Schichtdicke einen elektrischen Widerstand von zwischen 10⁸Ω und 10¹¹Ω aufweist.

2. Behälter nach Anspruch 1,
**dadurch gekennzeichnet,**
**dass** eine Polyester- (PET-)lage die dehnungsarme Kunststofflage (2) bildet.

3. Behälter nach Anspruch 1 oder 2,
**dadurch gekennzeichnet,**
**dass** die Barrierelage mittels eines Haftvermittlers mit der Coextrusionsfolie (4) verbunden ist.

4. Behälter nach Anspruch 1 oder 2,
**dadurch gekennzeichnet,**
**dass** die Barrierelage im Extrusionsverfahren mit der
Coextrusionsfolie (4) verbunden ist.

5. Behälter nach einem der vorhergehenden Ansprüche,
**dadurch gekennzeichnet, dass**
die der Barrierelage benachbarte Schicht (6) der Coextrusionsfolie (4) antistatisch ausgestaltet ist.

6. Behälter nach Anspruch 5,
**dadurch gekennzeichnet, dass**
die der Barrierelage benachbarte Schicht (6) aus einem Kunststoff gebildet ist, dem ein permanent antistatisches Additiv zugesetzt ist.

7. Behälter nach Anspruch 6,
**dadurch gekennzeichnet,**
**dass** die der Barrierelage benachbarte Schicht (6) aus Polyethylen (PE) gebildet ist.

8. Behälter nach einem der vorhergehenden Ansprüche,
**dadurch gekennzeichnet, dass**
die der Barrierelage benachbarte Schicht (6) eine Schichtdicke von höchstens 10 µm aufweist.

9. Behälter nach einem der vorhergehenden Ansprüche,
**dadurch gekennzeichnet, dass**
die von der Barrierelage abgewandte äußere Schicht der Coextrusionsfolie (4) aus Polyethylen gebildet ist.

10. Behälter nach einem der vorhergehenden Ansprüche,
**dadurch gekennzeichnet, dass**
die mehrlagige Folie (1) einen Inliner des Behälters bildet.

11. Behälter nach einem der vorhergehenden Ansprüche,
**dadurch gekennzeichnet, dass**
die Kunststofflage (5) reduzierten elektrischen Widerstandes Polyethylen als Kunststoff enthält.

12. Behälter nach einem der vorhergehenden Ansprüche,
**dadurch gekennzeichnet, dass**
die dehnungsarme Kunststofflage an zwei gegenüberliegenden Rändern der Folie (1) schmaler als die Gesamtbreite der Folie (1) bemessen ist, derart, dass die ableitfähige Barrierelage an diesen Rändern über die Breite der dehnungsarmen Kunststofflage (2) hinausragt.

13. Behälter nach Anspruch 12,
**dadurch gekennzeichnet, dass**
die dehnungsarme Kunststofflage an der Folie (1) an jedem Rand etwa 10 mm schmaler als die Folie (1) bemessen ist.

14. Behälter nach einem der vorhergehenden Ansprüche,
**dadurch gekennzeichnet, dass**
die Folie (1) die Wandung des Behälters bildet.

## Claims

1. A container designated as big bag or FIBC having antistatic properties, wherein the wall of the container comprises a multilayer film (1) with a dissipative barrier layer formed by a foil made of metal, namely an aluminium layer (3),
and with a plastic layer (5) of reduced electrical resistance which forms the middle layer of a coextrusion film (4) consisting of three coextruded layers and with a low-stretch plastic layer (2) which is provided on the side of the barrier layer facing away from the coextrusion film (4),
**characterized in that**
the barrier layer being bonded to the coextrusion film (4),
the plastic layer (5) of reduced electrical resistance contains embedded carbon components having a carbon content of 30% to 80%,
such
• that it is configured to be dissipative **in that** it has an electrical resistance of at most 10⁸Ω over its layer thickness,
• or that it is configured to be antistatic **in that** it has an electrical resistance of between 10⁸Ω and 10¹¹Ω over its layer thickness.

2. The container according to claim 1,
**characterized in that**
a polyester (PET) layer forms the low-stretch plastic layer (2).

3. The container according to claim 1 or 2,
**characterized in that**
the barrier layer is bonded to the coextrusion film (4) by means of an coupling agent.

4. The container according to claim 1 or 2,
**characterized in that**
the barrier layer is bonded to the coextrusion film (4) by an extrusion process.

5. The container according to one of the preceding claims,
**characterised in that**
the layer (6) of the coextrusion film (4) adjacent to the barrier layer is configured to be antistatic.

6. The container according to claim 5,
**characterised in that**
the layer (6) adjacent to the barrier layer is formed from a plastic to which a permanently antistatic additive is added.

7. The container according to claim 6,
**characterized in that**
the layer (6) adjacent to the barrier layer is formed from polyethylene (PE).

8. The container according to one of the preceding claims,
**characterized in that**
the layer (6) adjacent to the barrier layer has a layer thickness of at most 10 µm .

9. The container according to one of the preceding claims,
**characterized in that**
the outer layer of the coextrusion film (4) facing away from the barrier layer is formed from polyethylene.

10. The container according to one of the preceding claims,
**characterised in that**
the multilayer film (1) forms an inliner of the container.

11. The container according to one of the preceding claims,
**characterised in that**
the plastic layer (5) of reduced electrical resistance contains polyethylene as plastic.

12. The container according to one of the preceding claims,
**characterised in that**
the low-stretch plastic layer is dimensioned smaller at two opposite edges of the film (1) than the total width of the film (1) such that the dissipative barrier layer protrudes at these edges beyond the width of the low-stretch plastic layer (2).

13. The container according to claim 12,
**characterised in that**
the low-stretch plastic layer on the film (1) is dimensioned about 10 mm smaller than the film (1) at each edge.

14. The container according to one of the preceding claims,
**characterized in that**
the film (1) forms the wall of the container.

## Revendications

1. Récipient désigné comme un big bag ou un FIBC possédant des propriétés antistatiques, dont la paroi présente une feuille (1) en plusieurs couches,
avec une couche de barrière capable de dissiper une charge qui est formée par une feuille de métal, à savoir une couche d'aluminium (3),
et avec une couche de plastique (5) à résistance électrique réduite, qui forme la couche d'une feuille coextrudée (4) composée de plusieurs couches coextrudées,
et avec une couche de plastique à faible étirement (2) qui est prévue sur le côté de la couche de barrière opposé à la feuille coextrudée (4),
**caractérisé en ce que** la couche de barrière est assemblée avec la feuille coextrudée (4),
la couche de plastique (5) à résistance électrique réduite présente des composantes carbonées incorporées avec une proportion de carbone de 30 % à 80 %, de telle manière
• qu'elle soit capable d'évacuer une charge par le fait qu'elle présente sur son épaisseur de couche une résistance électrique de 10⁸ Ω au maximum,
• ou qu'elle soit antistatique par le fait qu'elle présente sur son épaisseur de couche une résistance électrique comprise entre 10⁸ Ω et 10¹¹ Ω.

2. Récipient selon la revendication 1, **caractérisé en ce qu'**une couche de polyester (PET) forme la couche de plastique à faible étirement (2).

3. Récipient selon la revendication 1 ou 2, **caractérisé en ce que** la couche de barrière est assemblée à la feuille coextrudée (4) au moyen d'un agent de pontage.

4. Récipient selon la revendication 1 ou 2, **caractérisé en ce que** la couche de barrière est assemblée à la feuille coextrudée (4) dans un procédé d'extrusion.

5. Récipient selon l'une des revendications précédentes, **caractérisé en ce que** la couche (6) de la feuille coextrudée (4) voisine de la couche de barrière est antistatique.

6. Récipient selon la revendication 5, **caractérisé en ce que** la couche (6) voisine de la couche de barrière est faite d'une matière plastique à laquelle est ajouté un additif antistatique permanent.

7. Récipient selon la revendication 6, **caractérisé en ce que** la couche (6) voisine de la couche de barrière est faite de polyéthylène (PE).

8. Récipient selon l'une des revendications précédentes, **caractérisé en ce que** la couche (6) voisine de la couche de barrière présente une épaisseur de couche de 10 µm au maximum.

9. Récipient selon l'une des revendications précédentes, **caractérisé en ce que** la couche extérieure tournée à l'opposé de la couche de barrière de la feuille coextrudée (4) est faite de polyéthylène.

10. Récipient selon l'une des revendications précédentes, **caractérisé en ce que** la feuille en plusieurs couches (1) est une doublure du récipient.

11. Récipient selon l'une des revendications précédentes, **caractérisé en ce que** la couche de plastique (5) à résistance électrique réduite contient du polyéthylène comme matière plastique.

12. Récipient selon l'une des revendications précédentes, **caractérisé en ce que** la couche de plastique à faible étirement est plus étroite sur deux bords opposés de la feuille (1) que la largeur totale de la feuille (1), de telle manière que la couche de barrière capable d'évacuer une charge dépasse sur ces bords au-delà de la largeur de la couche de plastique à faible étirement (2).

13. Récipient selon la revendication 12, **caractérisé en ce que** la couche de plastique à faible étirement sur la feuille (1) est plus étroite d'environ 10 mm que la feuille (1) sur chaque bord.

14. Récipient selon l'une des revendications précédentes, **caractérisé en ce que** la feuille (1) forme la paroi du récipient.
